# EUROPÄISCHE PATENTSCHRIFT

(11) **EP 2 148 109 B1**
(45) Veröffentlichungstag und Bekanntmachung des Hinweises auf die Patenterteilung: **25.01.2012**
(21) Anmeldenummer: 09162082.3
(22) Anmeldetag: 05.06.2009
(51) Int. Cl.: F16D 41/06, F16F 1/32

(54) **Freilaufeinheit mit Dämpfungselement und Dämpfungselement für eine Freilaufeinrichtung**
Freewheel unit with dampening element and dampening element for a free-wheel unit
Unité roue libre dotée d'un élément d'amortissement et élément d'amortissement pour un dispositif roue libre

(30) Priorität: 21.07.2008 DE 102008034891; 30.04.2009 DE 102009019535
(43) Veröffentlichungstag der Anmeldung: 27.01.2010
(73) Patentinhaber: Schaeffler Technologies GmbH & Co. KG, 91074 Herzogenaurach (DE)
(72) Erfinder: Smetana, Tomas, 91074 Herzogenaurach (DE); Radinger, Norbert, 90475 Nürnberg (DE); Dörrfuß, Florian, 91074 Herzogenaurach (DE)

(56) Entgegenhaltungen:
- EP-A- 0 303 147
- EP-A- 0 730 104
- WO-A-2006/001337
- DE-U1- 20 310 423
- FR-A- 2 588 340
- FR-A- 2 746 470
- JP-A- 2005 163 932
- US-A- 3 283 611

## Beschreibung

### Gebiet der Erfindung

Die Erfindung betrifft eine Freilaufeinheit mit wenigstens einem Freilaufring und mindestens einem Freilaufstern, mit Klemmkörpern zwischen dem Freilaufring und dem Freilaufstern, mit zumindest einem mit den Klemmkörpern wirkverbundenen Dämpfungskäfig und mit wenigstens einem gegen den Dämpfungskäfig vorgespannten Dämpfungselement und ein Dämpfungselement für diese Freilaufeinrichtung. Das Dämpfungselement ist wenigstens aus einer Wellfeder mit einander abwechselnden Wellenbergen und Wellentälern gebildet. Die Wellenberge greifen zumindest teilweise formschlüssig und federelastisch vorgespannt in Kerben am Dämpfungskäfig ein.

Eine in eine Riemenscheibe integrierte Freilaufeinheit mit einem Dämpfer ist beispielsweise aus der JP 2005 163932 bekannt.

### Hintergrund der Erfindung

Derartige Freilaufeinheiten sind für verschiedene Anwendungen geeignet, insbesondere für Anwendungen der Kraftfahrzeugtechnik, die einseitig sperrende oder umschaltbare Freiläufe vorsehen. Sie sind vorzugsweise in Getrieben aber auch in Hybridantrieben eingesetzt.

DE 102 43 535 zeigt eine Antriebseinheit aus einem Kurbelgetriebe und einem Hybridantrieb, in dem mehrere Freiläufe der Gattung verbaut sind. Die Antriebseinheit ist durch einen Verbrennungsmotor, eine elektrische Maschine und ein Getriebe gebildet. Das Kurbelgetriebe weist eine antreibende Welle auf, die in der Regel die Getriebeeingangswelle ist. Weiterhin weist das Getriebe eine angetriebene Welle (auch als Abtriebswelle bezeichnet) auf, die in der Regel eine Getriebeausgangswelle ist. Die beiden Wellen sind parallel zueinander ausgerichtet und drehbar in einem Getriebegehäuse gelagert. Außerdem sind die Wellen getrieblich miteinander verbunden. Die getriebliche Verbindung ist durch mindestens einen Exzenterantrieb auf der Antriebswelle und mindestens eine Freilaufeinrichtung auf der angetriebenen Welle sowie eine pleuelartige Verbindung zwischen dem Exzenterantrieb und der Freilaufeinrichtung hergestellt. Die betrachtete Ausführung des Exzenterantriebs weist mehrere nebeneinander auf der Antriebswelle angeordnete Exzentereinheiten auf, von denen jeweils eine mit einer Freilaufeinrichtung verbunden ist. Deshalb weist die Freilaufeinrichtung mehrere auf der angetriebenen Welle nebeneinander angeordnete Freilaufeinheiten auf.

Die drehbar gelagerte Abtriebswelle ist außen mit einem Polygonprofil versehen. Auf diesem Polygonprofil sitzen die Freilaufeinheiten. Die jeweiligen Freilaufeinheiten besitzen Klemmkörper, die zum Beispiel als Rollen ausgebildet sind. Das Polygonprofil ist an einem Innenring ausgebildet, der auf der Abtriebswelle sitzt. Die Klemmkörper sitzen zwischen dem Innenring und einem Außenring. Eine Relativverdrehung in die eine Drehrichtung zwischen Innenund Außenring ist mit den Klemmkörpern blockierbar. In die andere Drehrichtung wird bei einseitig wirkenden Freiläufen keine Sperrwirkung erzielt. Die Klemmkörper werden durch Federelemente in Sperrrichtung beaufschlagt und sind in einem Käfig geführt.

Die Antriebswelle wird durch den Verbrennungsmotor und/oder auch durch eine elektrische Maschine angetrieben. Die elektrische Maschine kann als Motor und/oder Generator ausgelegt sein. Alternativ kann die als Motor ausgelegte Antriebsmaschine auch als Anlasser für den Verbrennungsmotor dienen. Die elektrische Maschine ist beispielsweise koaxial zur Getriebeeingangswelle angeordnet. Die Verbindung der elektrischen Maschine mit der Getriebeeingangswelle ist über Kupplungen realisiert. Die Kupplungen können als gattungsgemäße Freiläufe ausgebildet sein, die gegebenenfalls auch eine zeitweise Entkopplung der elektrischen Maschine von der Brennkraftmaschine ermöglichen. Anders gesagt, in bestimmten Betriebszuständen kann die Brennkraftmaschine auch während der Fahrt des Kraftfahrzeuge stillgesetzt werden und die elektrische Maschine ist dann ein Hybridantrieb.

In dem in DE 102 43 535 A1 beschriebenen Getriebe besteht zwischen der elektrischen Maschine und sowohl der Getriebeeingangswelle als auch der Abtriebswelle eine getriebliche Verbindung. Beide getrieblichen Verbindungen sind mit jeweils mindestens einem Freilauf versehen. Im Falle, dass die elektrische Maschine als Generator arbeitet, greift die getriebliche Verbindung zwischen der angetriebenen Welle und dem Rotor. Der entsprechende Freilauf in der getrieblichen Verbindung zwischen Rotor und Abtriebswelle ist gesperrt. In dem Fall wird der Rotor elektrischen Maschine mit einer Geschwindigkeit angetrieben, die zumindest gleich groß oder größer ist als die Drehzahl des Verbrennungsmotors. Ein andere Freilauf in der getrieblichen Verbindung zur Getriebeeingangswelle sichert freilaufend die Trennung der Verbindung zwischen Rotor und Getriebeeingangswelle ab, d.h. in diesem Fall ist kein direkter Antrieb zwischen der Getriebeeingangswelle und dem Rotor geschaltet.

Wenn die elektrische Maschine als Antriebsmotor oder Anlasser betrieben wird, unterbricht der Freilauf die getrieblichen Verbindung zur Abtriebswelle. Die Freiläufe sperren auch wenn elektrische Maschine und Verbrennungsmotor zugleich antreiben und im Schubbetrieb, beispielsweise wenn die elektrische Maschine und der Verbrennungsmotor als Bremse wirken.

Denkbar ist, dass diese Freiläufe hinsichtlich der sperrbaren bzw. nicht sperrbaren relativen Drehrichtung des Außenrings gegen den Innenring umschaltbar sind. Durch Verwendung derartiger schaltbarer Freilaufeinheiten kann in dem Getriebe die Drehrichtung der Abtriebswelle geändert und beispielsweise ein Rückwärtsgang realisiert werden. Derartige schaltbare Freiläufe sind in drei Stellungen schaltbar. In einer Neutralstellung ist die Relativdrehung zwischen Innen und Außenring möglich. In einer ersten Sperrpositionen sind die beiden Ringe mittels der Klemmkörper und an zumindest einem der Ringe ausgebildete Rampen oder anders gestaltete Sperrflächen in eine erste Drehrichtung gegen Relativbewegung gegeneinander gesperrt. In einer zweiten Sperrposition sind die Ringe in die entgegengesetzte Drehrichtung auf gleiche Weise aneinander blockiert.

Eine Freilaufeinrichtung weist einen Außenring und einen konzentrisch zu dem Außenring angeordneten Freilaufstern, Klemmkörper, einen Käfig und Dämpfungselemente auf. Es gibt auch Anwendungen, in denen der Außenring ein Freilaufstern ist. Der Freilaufstern kann an der An- oder Abtriebswelle direkt oder an einem separaten Teil z.B. als Innen- oder Außenstern ausgebildet sein.

In DE 10 2005 048 611 A1 ist eine derartige Freilaufeinrichtung der Gattung näher beschrieben. Dieser Freilaufstern ist als das Polygonprofil gestaltet. Dieses Polygonprofil weist mehrere Paare an Flanken einander gegenüberliegender Sperrflächen auf. Zwischen dem Außenring und dem Freilaufstern sind mehrere Rollen als Klemmkörper angeordnet. Jede Rolle ist zwischen einem Paar der zuvor genannten Flanken (Sperrflächen) angeordnet. Die Freilaufeinrichtung weist außerdem eine Feder pro Klemmkörper als Spannelement auf. Der Klemmkörper wird mittels der Feder in einen Spalt zwischen dem Freilaufstern und dem Außenring gedrückt. In dieser Stellung werden die Klemmkörper als Klemmelemente in Kontakt zum Außenring und Freilaufstern gehalten.

Die Klemmkörper sind in einem Käfig gehalten. Der Käfig weist Seitenscheiben und Stege auf. Der Käfig weist an einer Seite eine sich radial erstreckende Seitenscheibe mit radial außen von der Seitenscheibe axial abgewinkelte Stegen auf. Ein Durchgangsloch der Seitenscheibe ist mit einem Innenprofil versehen, das mit dem Polygonprofil korrespondiert, so dass die Seitenscheibe verdrehfest auf dem Freilaufstern angeordnet ist. Die Stege sind außen an der Lauffläche des Außenrings angeordnet und zentrieren den Außenring. Jeder Steg ist umfangsseitig jeweils zwischen zwei der Klemmkörper angeordnet.

Die Seitenscheibe mit Stegen ist mit Löchern zur Lagerung von Umschaltmechanismen versehen. Jeder Umschaltmechanismus ist durch einen profilierten Stab, eine Doppelschenkelfeder und eine Scheibe pro umfangsseitige Lücke zwischen den Klemmkörpern gebildet. Der Profilstab ist in der Scheibe gelagert und die Scheibe ist drehbar in der Seitenscheibe angeordnet. Die Doppelschenkelfeder ist in einer Aufnahme des Profilstabes angeordnet. Beim Umschalten wird die Scheibe um ihre Drehachsen gedreht und somit der profilierten Stab mit der Feder in eine Schwenkbewegung versetzt. Dabei löst sich ein in eine Richtung gegen einen Klemmkörper vorgespannter Schenkel der Doppelschenkelfeder von dem Klemmkörper. Der andere Schenkel spannt in die entgegengesetzte Richtung gegen denjenigen Klemmkörper vor, der an der umfangsseitigen Lücke gegenüberliegt. Ein Klemmkörper wird somit durch die Schwenkbewegung von seinem Klemmkontakt zum Außenring und der Sperrfläche am Freilaufstern befreit und der andere Klemmkörper wird in die entgegengesetzte Richtung in den Spalt zwischen Außenring und Sperrfläche vorgespannt, so dass die Sperrrichtung umgeschaltet ist. Außerdem kann der Umschaltmechanismus in die Neutralstellung geschaltet werden, in der keiner der Schenkel der Doppelschenkelfeder mit den Klemmkörpern in Berührung steht.

Da mehrere Freiläufe axial nebeneinander angeordnet sind, können die Stäbe axial durch alle Freiläufe hindurch greifen und somit alle Freilaufeinheiten gleichzeitig geschaltet werden.

Eine weitere Seitenscheibe, deren Innenprofil eines Durchgangsloches ebenfalls mit dem Polygonprofil korrespondiert schließt den Käfig zur anderen Seite hinab, so dass die Rollen (Klemmkörper) axial zwischen den Scheiben gehalten sind.

In die Freilaufeinheit sind verschiedene Elemente integriert, die die Folgen schlagartigen Umschaltens verhindern sollen. In dem zuvor beschriebenen Beispiel wird durch das Umschalten bei hohen Drehzahlen viel kinetische Energie frei. Außerdem gilt es auch dann dämpfend zu wirken, wenn die Klemmkörper aufgrund ungünstiger kinematischer Verhältnisse durchrutschen.

Bei der in DE102 43 535 A1 beschriebenen Anordnung und auch in einer Anordnung nach 10 2005 048 611A1 sind an jedem Steg zwei gewölbte Anlaufflächen ausgebildet. Jeder der Anlaufflächen liegt einer der Klemmkörper gegenüber. Der Steg fängt beim Umschalten der Freilaufrichtung und bei Lastwechsel den jeweiligen Klemmkörper dadurch dämpfend ab, dass der Klemmkörper auf die jeweilige Anlauffläche aufläuft. Da die Seitenscheibe drehfest mit dem Freilaufstern verbunden ist, wird die Energie über die Seitenscheibe auf den Freilaufstern übertragen. Die Verbindung zwischen Steg und Seitenscheibe ist hoch belastet.

In DE 10 2005 048 611A1 ist eine weitere Möglichkeit der Dämpfung beschrieben. Diesem Fall wird die Dämpfung durch eine V-förmiger Blattfeder übernommen, die an einem Stift gelagert ist. Diese V-förmiger Blattfeder stützt sich an zwei gegenüberliegenden Rollen mit einer Kraft ab, die nahe der Selbsthemmung der Rollen wirkt. Die Feder schwenkt um den ortsfesten Stift. Die Vorspannung nahe der Selbsthemmung bewirkt vornehmlich die Dämpfung von Schwingungen der Rollen.

### Beschreibung der Erfindung

Die erfindungsgemäße Freilaufeinheit weist wenigstens einen Freilaufring und mindestens einen Freilaufstern, Klemmkörper zwischen dem Freilaufring und dem Freilaufstern, zumindest einen Käfig und wenigstens ein Dämpfungselement auf. Im Fall eines umschaltbaren Freilaufs weist der Freilauf kann außerdem noch zumindest einen Bestandteil einer Umschaltmechanik aufweisen. Der Freilaufring ist entweder ein Innenring, eine Welle oder ein Außenring. Der Freilaufstern ist entweder in einen Außenring integriert oder ist vorzugsweise ein Innenstern.

Der Freilaufstern weist mehrere Paare an Flanken einander gegenüberliegender Sperrflächen auf. Zwischen dem Freilaufring und dem Freilaufstern ist mindestens eine Reihe umfangsseitig zueinander auf Abstand gehaltener Klemmkörper angeordnet. Die Erfindung gilt auch für Freilaufeinheiten, in denen mindestens zwei Reihen der Klemmkörper angeordnet sind. Klemmkörper sind vorzugsweise Rollen, aber auch Kugeln oder andere geeignete Körper.

Jeder Klemmkörper ist zwischen einem Paar der zuvor genannten Flanken (Sperrflächen) angeordnet. Die Freilaufeinrichtung weist außerdem mindestens ein Spannelement pro Klemmkörper auf. Der Klemmkörper wird mittels des Spannelements in einen Spalt zwischen dem Freilaufstern und dem Außenring gedrückt, so dass die Klemmkörper in dieser Stellung zwischen Freilaufring und Freilaufstern eingeklemmt sind. Das Spannelement ist beispielsweise eine Feder beliebiger geeigneter Form. Die Klemmkörper sind mittels des Käfigs umfangsseitig auf Abstand gehalten. Die Spannelemente sind vorzugsweise an dem Käfig abgestützt. Alternativ sind die Spannelemente an geeigneten Strukturen des Freilaufsterns abgestützt.

In dem den zuvor beschriebenen Käfig aufweisenden Freilauf ist das Dämpfungselement separat zu dem Käfig angeordnet und abgestützt. Weiter sieht die Erfindung vor, dass das Dämpfungselement ein zeitweise durch zumindest einen der Klemmkörper beaufschlagtes Dämpfungselement gebildet ist, welches begrenzt relativbeweglich zwischen den Klemmkörpern und einer Anlauffläche des Freilaufsterns, vorzugsweise des Innensterns angeordnet ist. Dabei ist mindestens ein Dämpfungselement entweder axial oder radial zwischen dem jeweiligen Klemmkörper und einer Anlauffläche des Freilaufsterns oder der Welle vorgesehen. Mit einer

Ausgestaltung ist vorgesehen, dass das Dämpfungselement federelastisch ausgebildet ist.

Davon unabhängig ist vorgesehen, dass die Klemmkörper in einem zu dem Käfig separaten Dämpfungskäfig angeordnet sind, und wobei der Dämpfungskäfig mit wenigstens Dämpfungselement im Eingriff steht, wobei das Dämpfungselement zwischen dem Dämpfungskäfig und der Umgebungskonstruktion federelastisch eingespannt ist.

Der Dämpfungskäfig kann ein einzelnes Käfigsegment sein oder alternativ aus mehreren Käfigsegmenten bestehen bzw. in einteilig Form vorliegen. Die einteilige Form kann umfangsseitig einmal geschlitzt oder geschlossen sein. Der Dämpfungskäfig weist je nach Gestaltung eine oder mehrere in Umfangsrichtung zueinander benachbarte Käfigtaschen auf, in denen jeweils einer oder mehrere Klemmkörper gemeinsam geführt sind. Alternativ kann auch zu jeder der Taschen im Käfig eine oder können mehrere der Taschen axial benachbart ausgebildet sein. Die Geometrie und Lage des Käfigs und der Taschen sind derart, dass die Klemmkörper den Käfig zumindest bei ihren schlagartigen Bewegungen relativ zum Freilaufring bzw. Freilaufstern in Umfangsrichtung bzw. tangential bewegen.

Der Dämpfungskäfig und das Dämpfungselement stehen formschlüssig, alternativ reibschlüssig oder über eine Mischform von Form- und Reibschluss miteinander im Eingriff. Das Dämpfungselement steht in der einen Richtung mit dem Dämpfungskäfig form- und/oder reibschlüssig im Eingriff und ist in die von dem Dämpfungselement axial wegweisende Richtung elastisch vorgespannt direkt oder indirekt an der Anlauffläche abgestützt. Das Dämpfungselement stützt sich dabei direkt oder indirekt an der Umgebungskonstruktion, beispielsweise an einem zumindest axial mit dem Freilaufstern fest verbundenen radialen Scheibenabschnitt, ab. Direkt zur Umgebungskonstruktion heißt beispielsweise, dass Reibschluss zwischen dem Dämpfungselement und der Umgebungskonstruktion besteht. Indirekt heißt, dass zwischen Dämpfungselement und Umgebungskonstruktion beispielsweise Scheiben und/oder Federelemente angeordnet sind, mit denen das Dämpfungselement im Form- und/oder Reibschluss steht und die aber zumindest einen Teil der Energie an die Umgebungskonstruktion weitergeben. Der Scheibenabschnitt kann auch separat zu dem Freilaufstern ausgebildet und zumindest axial an diesem gehalten sein. Alternativ dazu ist das Dämpfungselement an einem Wellenabsatz oder an dem Dämpfungselement einer benachbarten Freilaufeinheit abgestützt. Wenn das Dämpfungselement sich an einem benachbarten Freilaufelement abstützt, ist es möglich, dass das Dämpfungselement auch mit dem benachbarten Freilaufelement, bevorzugt ebenfalls mit einem Dämpfungselement form- und oder reibschlüssig im Eingriff steht.

### Vorteile der Erfindung

- robuster Aufbau
- einfacher Aufbau
- kostengünstige Herstellung
- Erhöhung der Lebensdauer des Freilaufs
- Geräuschreduzierung

Die Erfindung sieht weiter ein Dämpfungselement für eine Freilaufeinheit vor. Das Dämpfungselement ist wellfederartig mit elastisch nachgiebige Wellenbergen ausgebildet und an der Umgebungskonstruktion abgestützt. Rampen an den Wellenbergen steigen vorzugsweise über der Umfangsrichtung und dabei in eine umfangsgerichtete Sperrrichtung des Freilaufs an. Die Rampen können dabei in radiale Richtung über einer Umfangslinie ansteigen oder vorzugsweise in axiale Richtung.

Der Käfig und das Dämpfungselement stehen über eine Mischform von hauptsächlich Form- jedoch auch Reibschluss miteinander im Eingriff. Dazu ist das Dämpfungselement durch seine eigene Federvorspannung mit Wellenbergen in Vertiefungen (Kerben) am Dämpfungskäfig vorgespannt. In die andere axiale Richtung ist das Dämpfungselement axial elastisch vorgespannt direkt oder indirekt an einer Anlauffläche abgestützt.

Wenn starke Beschleunigungen oder Verzögerungen (Stöße) auf den Käfig des Freilaufs wirken, werden diese durch die federelastische Wirkung des Dämpfungselements zunächst nur durch elastische Verformung des Dämpfungselements gedämpft. Dabei läuft der Dämpfungskäfig auf Rampen des Dämpfungselements auf, wobei die Rampen des Dämpfungselements elastisch einfedern und so dämpfen. Bei noch größeren Stößen kann das Dämpfungselement jedoch durch den Käfig mitgerissen werden, wobei der Formschluss erhalten bleibt und das Dämpfungselement sich mit dem Käfig relativ zur Anlauffläche mitbewegt. Dabei entsteht Reibung zwischen dem Dämpfungselement und der Anlauffläche, so dass die Stöße auf diese Weise zusätzlich gedämpft werden.

Wenn eine derartige Freilaufeinheit in einem Kurbel-CVT eingesetzt wird, sind die Anforderungen an ein derartiges Dämpfungselement besonders hoch. Das wellfederartige Dämpfungselement muss für eine einwandfreie Funktion nach der Montage eine definierte Vorspannung aufweisen. Diese Vorspannung garantiert die Funktion der Dämpfungsanordnung. Ohne definierte Vorspannung würde der Dämpfungskäfig lediglich in Umfangsrichtung durchrutschen und kaum kinetischen Energie über die Wellfeder aufnehmen. Wird die Wellfeder zu stark vorgespannt, entsteht erhöhte Reibung, welche sich negativ auf den Wirkungsgrad des Systems auswirkt. Dies gilt insbesondere für schaltbare Freiläufe bei maximaler Schaltfrequenz.

Die durch Blechstärke und Höhe der Rampen bestimmte notwendige Grundvorspannung des Systems soll auch bei großen Toleranzen im System auf die gewünschte Größe eingestellt werden, da diese durch Toleranzabweichungen stark beeinflusst ist. Der Auslegung der Höhe der Rampen und auch der Materialstärke der Wellfeder sind außerdem aufgrund des geringen verfügbaren Bauraumes oft Grenzen gesetzt.

Das Dämpfungselement weist wenigsten eine Wellfeder auf, die sinusförmig ausgebildet sein kann. Alternativ weicht deren Verlauf von der Sinusform beliebig ab. Eine Ausgestaltung der Erfindung sieht eine Wellfeder vor, deren Wellenberge sich nur in eine gemeinsame Richtung hervor wölben. Die Wellenberge gehen in Täler über, die flache Kreisringsegmente sind. Anders gesagt, die Rückseite der Wellfeder weist flache Abschnitte auf, mit denen die Wellfeder in der Freilaufeinheit abgestützt ist. Durch die flachen Abschnitte sind Reibflächen definiert, mit denen die Wellfeder gegen Dämpfungsstöße an der Umgebungskonstruktion definiert anliegt. Die Freilaufeinheit weist mindestens ein oder mehrere der Dämpfungselemente auf, die hinsichtlich ihrer Abmessungen, der Auswahl des Materials, der Anzahl und Ausbildung der Wellenberge und/oder Wellentäler, der Anzahl und Ausführung der federelastischen Abschnitte und deren Federkonstanten zueinander gleich oder sich voneinander unterscheidend ausgebildet sind.

Die Federkraft, ist bei elastischer Verformung proportional zur Verschiebung des Kraftangriffspunktes der Feder entgegen der Kraftrichtung. Die der Federkraft entgegengesetzte Kraft, die eine Längung der Feder bewirkt, ist gleich dem Produkt aus Federkonstante dem Weg, um den sich der Kraftangriffspunkt der Feder verschiebt. Bei einer Blattfeder (Biegefeder) ist dies die Querverschiebung des freien Endes des Federblattes. Anders gesagt, von zwei Federn mit verschiedenen Federkonstanten ist diejenige mit der kleineren Federkonstante weicher, da man eine geringere Kraft aufwenden muss, um sie zu verformen.

Die Wellfeder ist in die eine Richtung an dem Dämpfungskäfig und in die andere Richtung an der Umgebungskonstruktion vorgespannt abgestützt. Dabei kann die Federkraft radial oder axial wirken oder in beliebig gerichtete radiale und axiale Vektoren aufgeteilt sein. Sie ist entweder axial oder radial zwischen dem Dämpfungskäfig und der Umgebungskonstruktion abgestützt. Unter Umgebungskonstruktion ist beispielsweise einer der Ringe der Freilaufeinheit zu verstehen. Alternativ kann das Dämpfungselement auch an einem separaten Freilaufkäfig abgestützt sein, der in umschaltbaren Freiläufen eingesetzt wird. Der Dämpfungskäfig weist Kerben auf, die zumindest abschnittsweise mit Abschnitten der Wellenberge der Wellfeder so korrespondieren, dass jeweils ein Wellenberg der Wellfeder in einer der Kerben des Dämpfungskäfigs verrastet. Wellenberg und Kerbe weisen bevorzugt miteinander korrespondierende Rampen auf, die aneinander liegen und beim Auffangen von Stößen aneinander wirken.

Vorzugsweise ist die Wellfeder partiell mindestens einmal jedoch vorzugsweise am Umfang mehrmals geschlitzt bzw. ausgespart, so dass zueinander benachbarte und voneinander getrennte Abschnitte an der Wellfeder entstehen, die zwar zueinander relativbeweglich sind, die Feder aber nicht vollständig teilen. So ist es denkbar, dass die Feder tangential, umfangsseitig , radial oder anderes gerichtete Schlitze bzw. Ausnehmungen aufweist. Die an dem Schlitz zueinander benachbarten Abschnitte der Feder können unabhängig voneinander zur Schaffung anderer Geometrien und Federraten dauerhaft verformt werden oder andere Federkonstanten aufweisen.

Solche Abschnitte sind beispielsweise aus den Tälern und/oder den Wellenbergen frei geschnittene und dabei einseitig-einmaterialig an das Material der Wellfeder angebundene blattfederartige oder bügelartige Federzungen mit einem freien Ende. Alternativ sind die Abschnitte ein- oder beidseitig frei geschnittene jedoch mit den Enden noch einmaterialig mit der Wellfeder verbundene bügelartige Federelemente, die vom Verlauf der Wellenberge abweichend aus der Wellfeder in gleiche oder andere Richtung zu den Wellenbergen hervorstehen.

Die Wellfedern können hinsichtlich ihrer Grundvorspannung eingestellt werden, indem Querschnitt, Länge, Form und Anbindung an die Wellfeder gezielt beeinflusst werden. Die Vorspannung der Wellfeder ist nicht mehr nur von dem Querschnitt des Federmaterials der Wellfeder und der Ausbildung der Wellen abhängig, sondern kann unabhängig davon eingestellt werden. So ist es möglich, die Grundvorspannung nur über gesondert aus der Wellfeder herausgestellte federelastische Abschnitte zu realisieren.

Die Federkonstante dieser Abschnitte kann geringer sein als die des eigentlichen Grundkörpers der Wellfeder. Bei Stößen auf den Dämpfungskäfig geben diese Federelemente dann soweit elastisch nach, dass die Federwirkung des Grundkörpers der Wellfeder die eigentliche Dämpfung übernimmt.

Das Dämpfungselement ist entweder nur durch die Wellfeder(n) gebildet oder weist weitere Bestandteile wie Halterungen, Führungen oder andere Elemente auf.

### Kurze Beschreibung der Zeichnungen

Die Erfindung wird nachfolgend anhand von Ausführungsbeispielen näher erläutert. Es zeigen:
- Figur 1: einen Ausschnitt einer Freilaufeinrichtung, die als umschaltbarer Rollenfreilauf ausgeführt ist;
- Figur 2: eine mögliche Anwendung der Freilaufeinrichtung auf einer Abtriebswelle eines nicht weiter darge- stellten Kurbelgetriebes in einem Teilschnitt durch die Außenringe,
- Figur 3: einen Ausschnitt aus der Freilaufanordnung nach Figur 2,
- Figuren 4 bis 6: die Prinzipdarstellungen zum Aufbau und zur Funk- tion der jeweiligen Dämpfung der Freilaufeinheiten nach Figur 1 bis 3 in einer vereinfachte Draufsicht auf zwei der Klemmkörper 4 in einem Abschnitt des Dämpfungskäfigs,

- Figuren 7 bis 8: grafische Darstellungen der in der jeweiligen Frei- laufeinheit im Zusammenhang mit der Dämpfung wirkenden Kräfte.
- Figuren 9 und 9a: ein Ausführungsbeispiel einer Wellfe- der,
- Figur 10: das Detail Z einer Wellfeder nach Figur 10a vergrö- ßert dargestellt,
- Figur 11: ein weiteres Ausführungsbeispiel einer Wellfeder,
- Figur 12: ein Detail der Wellfeder, vergrößert dargestellt und
- Figur 13: eine Prinzipdarstellung des Zusammenwirkens von Dämpfungskäfig und Dämpfungselement, anhand des schematisch stark vereinfacht, vergrößert und nicht maßstäblich dargestellten Details X aus Figur 3.

### Beschreibung der Zeichnungen

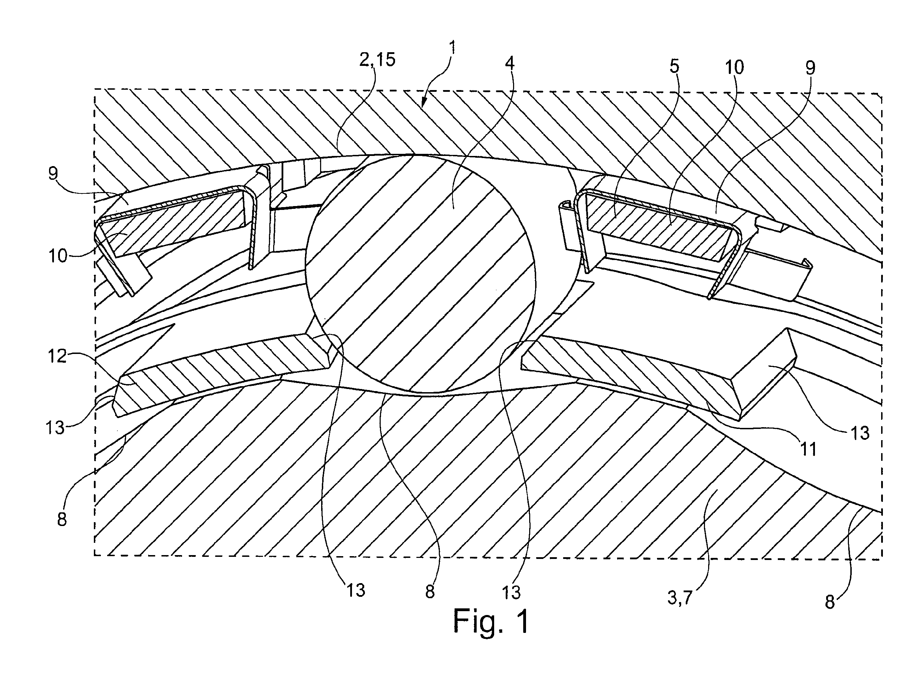

Figur 1 - Figur 1 zeigt einen Ausschnitt einer Freilaufeinheit 1, die als umschaltbarer Rollenfreilauf ausgeführt ist. Die erfindungsgemäße Freilaufeinheit 1 weist einen Freilaufring 2, der als Außenring 15 ausgeführt ist, einen Freilaufstern 3, der ein Innenstern ist, Klemmkörper 4 zwischen dem Freilaufring 2 und dem Freilaufstern 3, einen Käfig 5 und einen Dämpfungskäfig 11 auf. Der Freilaufstern 3 ist in diesem Fall direkt an einer Welle 7 beispielsweise an eine Abtriebswelle ausgebildet.

Der Freilaufstern 3 weist mehrere Paare Flanken einander gegenüberliegender Sperrflächen 8 auf. Zwischen dem Freilaufring 2 und dem Freilaufstern 3 ist eine Reihe umfangsseitig zueinander auf Abstand gehaltener Klemmkörper 4 angeordnet. Die Klemmkörper 4 sind als Rollen ausgebildet.

Jeder Klemmkörper 4 ist zwischen einem Paar der zuvor genannten Flanken (Sperrflächen 8) angeordnet. Die Freilaufeinheit 1 weist außerdem mindestens ein Spannelement 9 pro Klemmkörper 4 auf. Das jeweilige Spannelement 9 ist jeweils eine Feder, die an den Stegen 10 des Käfigs 5 abgestützt und gehalten ist. Der Klemmkörper 4 wird mittels des Spannelements 9 in einen Spalt zwischen dem Freilaufstern 3 und dem Außenring gedrückt. Die Klemmkörper 4 sind mittels des Käfigs 5 umfangsseitig durch die Stege 10 auf Abstand gehalten.

Der Dämpfungskäfig 11 ist separat zu dem Käfig 5 angeordnet und mit Stegen 12 ausgebildet. Die Stege 12 weisen rampenartig ausgebildete Abschnitte 13 auf, von denen jeder einem Klemmkörper 4 zugewandt ist.

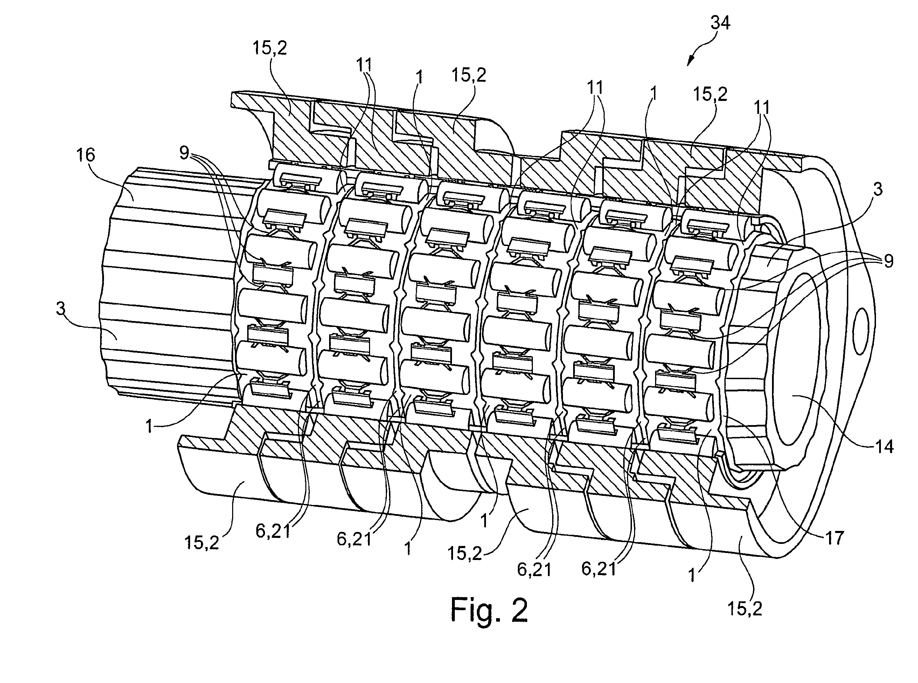

Figur 2 - In Figur 2 ist eine mögliche Anwendung der Freilaufeinheiten 1 in einer Freilaufanordnung 34 auf einer Abtriebswelle 14 eines nicht weiter dargestellten Kurbelgetriebes in einem Teilschnitt durch die Außenringe 15 gezeigt.

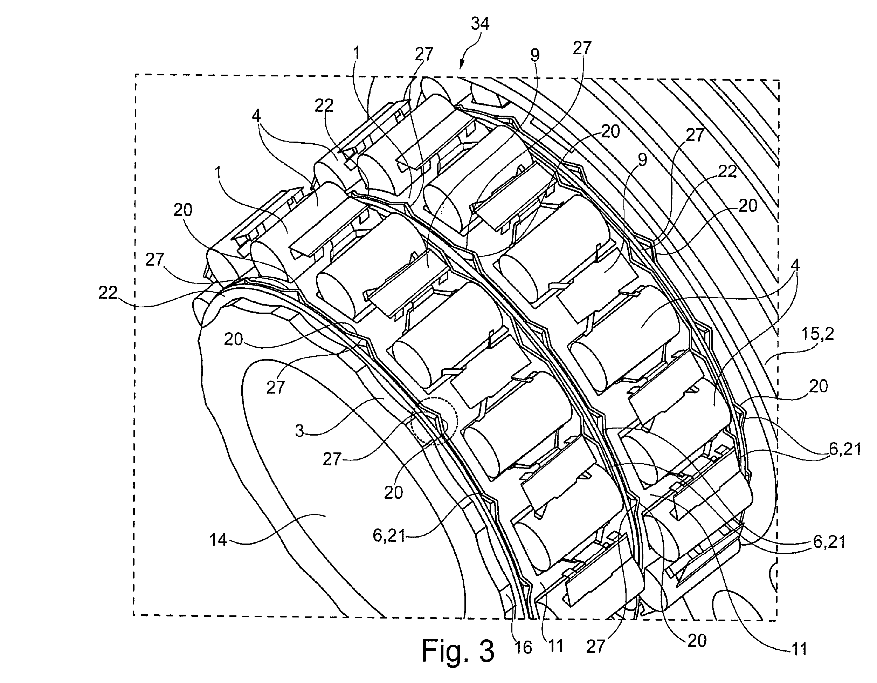

Figur 3 - Figur 3 zeigt einen Ausschnitt aus dieser Freilaufanordnung 34. Pro Außenring 15 kommt eine Freilaufeinheit 1 zur Anwendung. Die Außenringe 15 sind in diesem Falle die Freilaufringe 2 (Außenringe) und gelenkig mit jeweils einem Pleuel verbunden.

Figuren 2 und 3 - Die Freilaufeinheiten 1 sind axial nebeneinander auf der Abtriebswelle 14 angeordnet und untereinander axial aneinander abgestützt. Die in der Anordnung äußeren Freilaufeinheiten 1 sind axial an Absätzen 16 und 17 des Freilaufsterns 3 abgestützt. Die Freilaufeinheiten 1 sind in dem Schnitt in Figur 2 nicht vollständig dargestellt. Der Käfig 5 fehlt in der Darstellung nahezu vollständig. Stattdessen ist der ursprünglich radial und koaxial innerhalb des Käfigs 5 angeordnete Dämpfungskäfige 11 sichtbar. Sichtbar sind jedoch auch noch die vom Käfig 5 losgelöst dargestellten Spannelemente 9. Die anderen Freilaufeinheiten 1 sind durch Außenringe 15 verdeckt. In der Freilaufanordnung 34 sind insgesamt sechs der Dämpfungskäfige 11 nebeneinander angeordnet.

Zwischen den Stirnseiten der Dämpfungskäfige 11 und den Absätzen 16 und 17 sowie zwischen den Stirnseiten der aneinander abstützenden Dämpfungskäfige 11 ist jeweils eine oder sind zwei Dämpfungselemente 6 in Form von Wellfedern 21 angeordnet. Die Dämpfungskäfige 11 sind über die jeweilige Wellfedern 21 und die Wellfedern 21 wiederum sind entweder an Anlaufflächen der Absätze 16 oder 17 des Freilaufsterns 3 axial abgestützt oder weisen stirnseitig selbst einander axial zugewandte Anlaufflächen auf und sind begrenzt relativbeweglich zwischen den Klemmkörpern 4 und den Anlaufflächen angeordnet. Die Wellfedern 21 sind jeweils durch eine Scheibe 22 voneinander oder von den Absätzen 16 bzw. 17 getrennt, die alternativ Anlaufflächen aufweisen können. Die jeweilige Scheibe 22 ist beispielsweise ein Sicherungsring auf der Abtriebswelle 14 bzw. dem Freilaufstern 3. Die zwischen den Wellfedern 21 angeordneten Scheiben 22 weisen gleichzeitig zwei voneinander weg gewandte der Anlaufflächen auf, die alternativ, wenn zwei Wellfedern direkt aneinander liegen, auch an den Wellfedern ausgebildet sein können.

Zumindest an den Wellenbergen 27 der Wellfedern 21 und dadurch, dass die Wellfedern 21 aus Federstahl sind, sind die Dämpfungselemente 6 federelastisch ausgebildet. Jeder Dämpfungskäfig 11 weist mehrere umfangsseitig zueinander benachbarte Kerben 20 auf, in die jeweils einer der Wellenberge 27 der Wellfeder 21 elastisch vorgespannt eingreift.

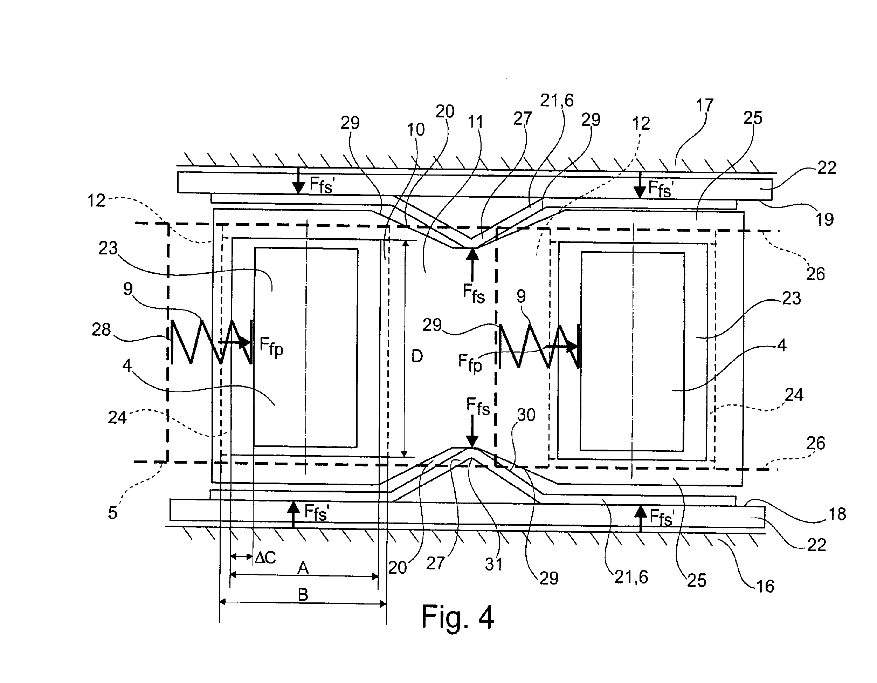

Figuren 4, 5 und 6 - Die Figuren 4 bis 6 zeigen Prinzipdarstellungen zum Aufbau und zur Funktion der jeweiligen Dämpfung der Freilaufeinheiten nach Figur 1 bis 3. Es ist eine vereinfachte Draufsicht auf zwei der Klemmkörper 4 in einem Abschnitt des Dämpfungskäfigs 11 zu sehen. Die Darstellung wird von dem mit der gestrichelten Linien markierten Verlauf des ansonsten nicht dargestellten und zu dem Dämpfungskäfig 11 separaten Käfig 5 überlagert.

Figur 4 - Wie insbesondere aus der Darstellung nach Figur 4 hervorgeht, sind die Klemmkörper 4 zum einen in Käfigtaschen 23 des Dämpfungskäfigs 11 und zum anderen auch in Käfigtaschen 24 des Käfigs 5 gehalten. Käfigtaschen 23 bzw. 24 sind radiale Ausnehmungen in Käfigen 5 bzw. 11, die umfangsseitig voneinander durch Stege 10 bzw. 12 voneinander getrennt sind. In axialer Richtung sind die Käfige 5 bzw. 11 durch Seitenränder 25 bzw. 26 begrenzt. Die Seitenränder 26 verbinden die Stege 12 und die Seitenränder 25 die Stege 10 in Umfangsrichtung miteinander. An einer Käfigtasche 23 bzw. 24 liegen sich jeweils in Umfangsrichtung zwei der Stege 10 des Dämpfungskäfigs 11 bzw. zwei der Stege 12 des Käfigs 5 im wesentlichen parallel gegenüber.

Der Abstand A zwischen den in der jeweiligen Käfigtasche 23 einander gegenüberliegenden Stegen 10 ist größer als der Durchmesser der Rollen (Klemmkörper 4) und kleiner als der Abstand B. Der Abstand B beschreibt den engsten Abstand zwischen den einander gegenüberliegenden Stegen 12 an den Käfigtaschen 24 des Käfigs 5. In axialer Richtung liegen sich an einer Käfigtasche 23 bzw. 24 jeweils zwei der Seitenränder 25 am Dämpfungskäfig 11 und zwei der Seitenränder 26 am Käfig 5 im wesentlichen parallel gegenüber.

Der Abstand D zwischen den Seitenrändern 25 bzw. 26 ist für die Taschen 23 und 24 gleich und geringfügig größer als die axial außen gerichtete Länge des jeweiligen Klemmkörpers 4. Der umfangsseitige Abstand zwischen den Taschen 23 untereinander oder den Taschen 24 untereinander kann auf den Umfang betrachtet gleich sein oder sich von Tasche zu Tasche unterscheiden, jedoch sind die Taschen 23 und 24 zueinander bevorzugt mit gleicher Anzahl und Teilung umfangsverteilt.

Die Wellfeder 21 ist zwischen dem Dämpfungskäfig 11 und der Umgebungskonstruktion federelastisch eingespannt. Die Umgebungskonstruktion ist in diesem Fall entweder durch einen Absatz 16, Absatz 17 und/oder eine Scheibe 22 oder einen benachbarten Dämpfungskäfig 11 mit den entsprechenden Anlaufflächen 18 bzw. 19 gebildet. Der Dämpfungskäfig 11 und das Dämpfungselement 6 stehen über die Wellenberge 27, die in die Kerben 20 eingreifen, formschlüssig miteinander im Eingriff.

Die Spitzen der Wellen 27 sind mittels einer Federkraftkomponente F_{fS} pro Wellenberg 27 axial gegen den Dämpfungskäfig 11 vorgespannt. Damit ist zusätzlich eine reibschlüssige Verbindung zwischen dem Dämpfungskäfig 11 und dem Dämpfungselement 6 sichergestellt, auf die alternativ auch verzichtet werden kann.

In den Darstellungen der Figuren 1 bis 6 ist jeweils beidseitig des Dämpfungskäfigs 11 ein Dämpfungselement 6 angeordnet. Es ist auch denkbar dass ein derartiges Dämpfungselement nur einseitig des Dämpfungskäfigs 11 angeordnet ist. Außerdem ist auch denkbar, dass die Wellen und damit die Rampen sich nicht in axialer Richtung von dem Körper der Wellfeder abheben, sondern in radialer Richtung hervorstehen. Die entsprechenden Rampen am Dämpfungskäfig sind dann entweder radial innen oder radial außen beispielsweise an einer Umfangsfläche des Dämpfungskäfigs ausgebildet. In diesem Fall kann axialer Bauraum gespart werden.

Das Dämpfungselement 6 steht beidseitig in die eine Richtung mit jeweils einem Dämpfungskäfig 11 form- und/oder reibschlüssig im Eingriff und ist in die von dem Dämpfungselement 6 axial wegweisende Richtung elastisch vorgespannt an der jeweiligen Anlauffläche 18 oder 19 abgestützt, wobei sich die Federkraftkomponente F_{fS} in die Flächenlasten F_{fS'} aufteilt. Das Dämpfungselement stützt sich dabei beispielsweise an einem zumindest axial mit dem Freilaufstern fest verbundenen radialen Scheibenabschnitt einer Scheibe 22 oder alternativ direkt an dem Wellenabsatz 16 bzw. 17 ab. Alternativ dazu ist das Dämpfungselement 6 an einem Wellenabsatz oder an dem Dämpfungselement einer benachbarten Freilaufeinheit 1 abgestützt.

Figur 4 -In der Darstellung nach Figur 4 sind die Klemmkörper 4 mittels der Federkraft F_{fP} jeweils eines Spannelements 9 in die im Bild nach rechts gerichtete Richtung zwischen den nicht dargestellten Freilaufstern und den jeweiligen Freilaufring geklemmt (Roller - Engagement). Das jeweilige Spannelement 9 ist, wie anfangs schon beschrieben, an dem jeweiligen Steg 12 des Käfigs 5 abgestützt. In dieser Stellung ist beidseitig ein Spalt zwischen dem Klemmkörper 4 und dem Steg 10 des Dämpfungskäfigs 11 ausgebildet d.h., es gibt keinen Kontakt zwischen Klemmkörper 4 und Dämpfungskäfig 11.

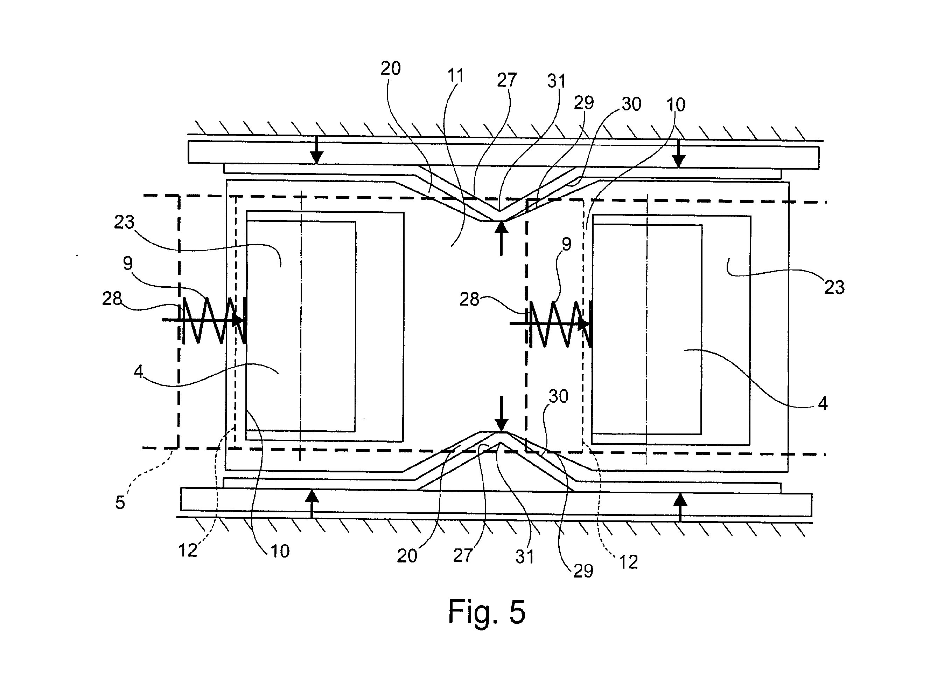

Figur 5- In der Darstellung nach Figur 5 sind die Klemmkörper 4 in einer Position gezeigt, in der sie sich nach Überwindung des Abstandes Δc (Figur 4) in Richtung des Pfeils >Roller Disengagement< und entgegen der Federkraft F_{fP} gegen einen der Stege 10 der jeweilige Käfigtasche 23 des Dämpfungskäfigs 11 bewegt. Zum Kontakt der Klemmkörper 4 mit dem jeweiligen Steg 12 des Käfigs 5 kommt es nicht, da wie anfangs schon erwähnt B>A (Figur 4) ist. Das Spannelement 9 in Form der Feder ist gegen Bewegung auf Block gesichert, in dem die Stützbasis 28, an der sich das Spannelement 9 abstützt, von der Kante des Stegs 10 in Richtung umfangsseitige Mitte des Stegs 10 entfernt und somit ein Zusammendrücken auf Block nicht möglich ist.

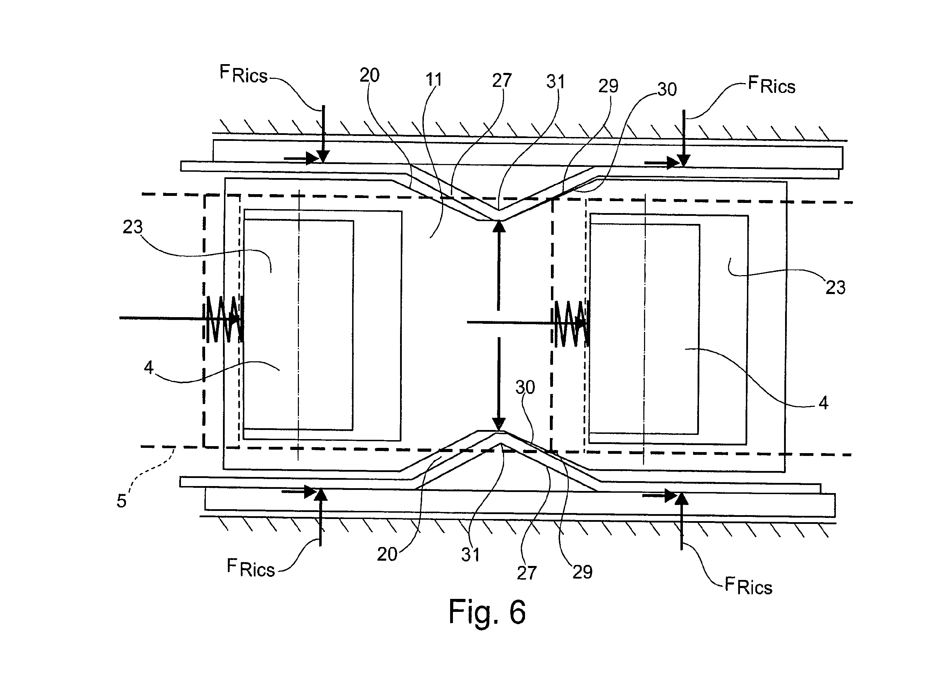

Figur 6 - Die Bewegung des Klemmkörpers 4 gegen den jeweiligen Steg 10 kann schlagartig stattfinden. Wenn der jeweiligen Klemmkörper 4 schlagartig gegen den Steg 10 schlägt, verformen sich die Wellenberg 27 der Wellfeder 21, da eine in der jeweiligen Kerbe 20 ausgebildeten Rampe 29 auf eine an der Welle 27 der Wellfeder 21 ausgebildeten Rampe 30 trifft. Alternativ oder zugleich dazu schiebt sich die Spitze 31 des Wellenbergs 27 an die Rampe 29 und steigt an dieser auf. Der Wellenberg 27 federt elastisch ein und die axiale Vorspannung auf den Dämpfungskäfig 11 nimmt zu. Durch die kinetischen Energie der Klemmkörper 4 wird das Dämpfungselement 6 in Umfangsrichtung begrenzt mitgerissen. Die aus den zunehmenden Axialkräften resultierende Reibkraft FricS wandelt die kinetischen Energie Wärme um. Die Rampen verlaufen linear oder gebogen.

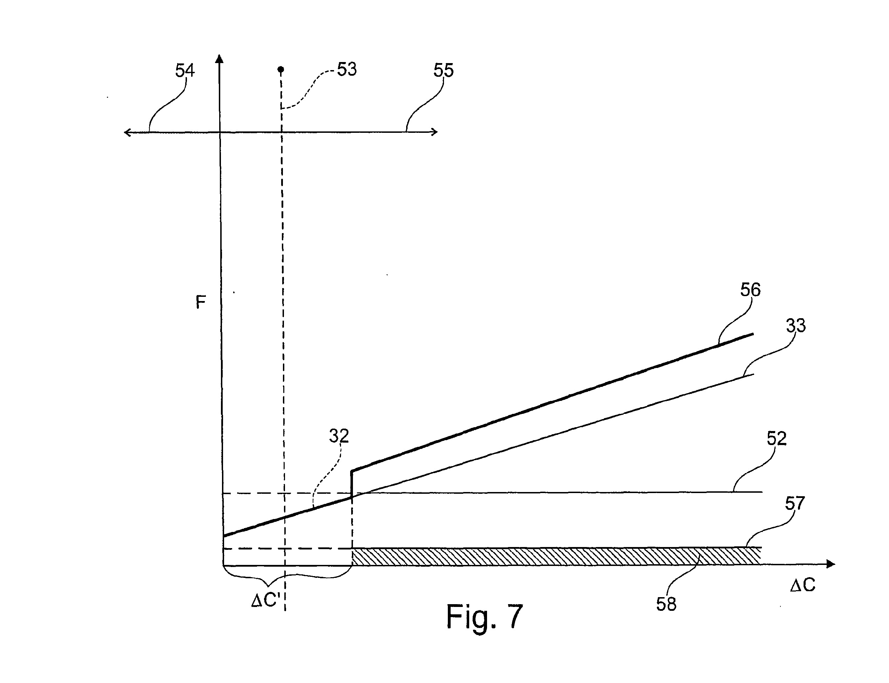

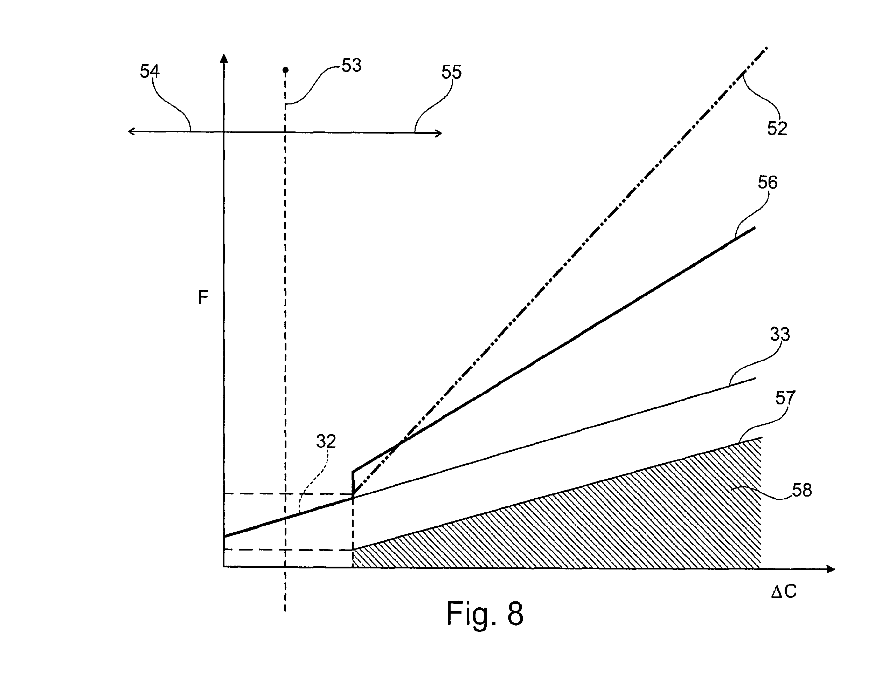

Figuren 7 und 8 - In den Figuren 7 bis 8 sind die in der jeweiligen Freilaufeinheit 1 im Zusammenhang mit der Dämpfung wirkenden Kräfte grafisch dargestellt. Die Figuren 7 bis 8 zeigen jeweils ein Diagramm, dessen Ordinate für den Betrag der jeweiligen Kräfte F wie der Federkraft des Vorspannelements 9, deren Verlauf mit durchgehende Linie 33 dargestellt ist, der Gegenkraft des Klemmkörpers 4, deren Verlauf anfangs mit der gestrichelten Linie 32 und später mit der durchgehend verlaufenden Linie 56 dargestellt ist, der Federkraft der Wellfeder 21, deren Verlauf mit der Linie 52 dargestellt ist, und der Reibungskraft zwischen der Wellfeder 21 und deren jeweiligen Anlauffläche, deren Verlauf mit der Linie 57 dargestellt ist über den mit der Abszisse beschriebenen Weg Δc des jeweiligen Klemmkörpers 4 bzw. Dämpfungskäfigs steht. Die durch die Abszisse und Linie 57 begrenzte schraffierte Fläche 58, symbolisiert Reibverluste, die der Dämpfung entsprechen. Weiterhin trennt die Trennlinie 53 symbolisch die Betriebszustände der geschalteten Freilaufeinheit in Richtung des Pfeils 54 und der nicht geschalteten Freilaufeinheit 1 in Richtung des Pfeils 55 der geschalteten Freilaufeinheit 1.

Figur 7 - Figur 7 beschreibt die Kinematik im geschalteten Zustand oder im neutralen Zustand. Wie anfangs schon beschrieben, ist der Freilauf im geschalteten Zustand in eine Richtung gegen Relativbewegungen der Freilaufsterns gegenüber dem Freilaufring gesperrt. Aus dem neutralen Zustand kann die Freilaufeinheit wahlweise in die eine oder andere Richtung gegen Relativbewegungen des Freilaufsterns gegenüber dem Freilaufring geschaltet werden.

In dem in Figur 7 beschriebenen Zustand ist der jeweilige Klemmkörper 4 anfangs mit der Federkraft (Linie 33), des Spannelementes 9 entweder in einem Schwebezustand gerade noch belastet zwischen Freilaufstern und Freilaufring eingeklemmt. Die Darstellung nach Figur 7 entspricht der Stellung der Elemente zueinander nach Figur 4. Im eingeklemmten Zustand liegen die mit der durchgehenden Linie 33 beschriebenen Federkräfte an dem Klemmkörper 4 an, jedoch ist dieser durch die Klemmwirkung zwischen der jeweiligen Sperrfläche der Freilaufsterns und dem Freilaufring geklemmt, so dass auf diese Federkräfte in diesem Betriebszustand auch verzichtet werden könnte.

Der Abschnitt Δc' steht dabei für einen Schwebezustand, in dem der Klemmkörper 4 kurzzeitig beispielsweise bei Beginn eines Umschaltens oder durch Schwankungen im Betrieb mit einer Gegenkraft (gestrichelte Linie 32) gegen die Federkraft (Linie 33) des Spannelementes 9, so dass beide Kräfte gleich sind, deshalb deren den Verlauf beschreibenden Linien 32 und 33 aufeinander liegend dargestellt ist, und der Klemmkörper 4 noch in Position bleibt. Die mit dem Verlauf der Linie 34 beschriebene axiale Vorspannkraft des Dämpfungselements 6 entspricht konstant der Kraft, mit der das Dämpfungselement 6 zwischen den Dämpfungskäfig 11 und die Anlagefläche montiert ist, und deren Verlauf somit konstant ist.

Wenn dieser Schwebezustand langsam überwunden wird, steigt die durch die gestrichelte Linie 32 beschriebene Kraft an den Klemmkörpern 4 durch das Umschalten an und ist nach Überwinden der Distanz Δc' (siehe Figur 4) größer als die mit dem Verlauf der Linie 33 beschriebene Kraft des Spannelementes 9 und ist daher mit der Linie 56 dargestellt. Die mit dem Verlauf der Linie 52 beschriebene axiale Vorspannung der Wellfeder 21 entspricht der Vorspannung, mit der die Wellfeder 21 bei der Montage in die Freilaufeinheit 1 vorgespannt wurde, und bleibt nach wie vor konstant unbeeinflusst da die Bewegung langsam ist. Unter "langsam" ist das nicht schlagartige Bewegen der Klemmkörper 4 in Richtung des jeweiligen Stegs bis zum Auftreffen auf den Steg und das anschließende langsame Verschieben des Dämpfungskäfigs 11 mittels des am Steg anliegenden Klemmkörpers 4 zu verstehen. Das Dämpfungselement 6 wird über die formschlüssige Verbindung mit dem Dämpfungskäfig 11 begrenzt in Umfangsrichtung mitgenommen, ohne dass sich die axiale Vorspannkraft des Dämpfungselementes 6 erhöht. Die dadurch entstehende Reibung ist durch den Verlauf der Reibkraft mit der Linie 57 beschrieben. Die Reibkraft ist relativ gering, weil diese nur von der Höhe der axialen Vorspannkraft F_{fS} abhängt.

Figur 8 - Im Falle schlagartigen Umschaltens (Figuren 6) bewegt sich der jeweilige Klemmkörper 4 unter einem durch die Linie 32 beschriebenen Einfluss einer Kraft über die Distanz Δc zunächst gegen die mit dem Verlauf der Linie 33 beschriebene Kraft des Spannelementes 9 und komprimiert das Spannelement 9 solange bis der Klemmkörper 4 schlagartig auf den Steg des Dämpfungskäfigs 11 trifft und diesen in Umfangsrichtung gegen den Widerstand der schlagartig ansteigenden und mit der Linie 52 beschriebenen Vorspannkraft des Dämpfungselements 6 mitreißt. Die Werte der axial gerichteten Kräfte des Dämpfungselementes 6 können dabei die in Umfangsrichtung bzw. in tangentiale Richtung gerichteten Kräfte an den Klemmkörpern 4 übersteigen. Die mit dem Verlauf der Linie 57 beschriebene Reibkraft nimmt zu und verursacht die gewollte Dämpfung 58.

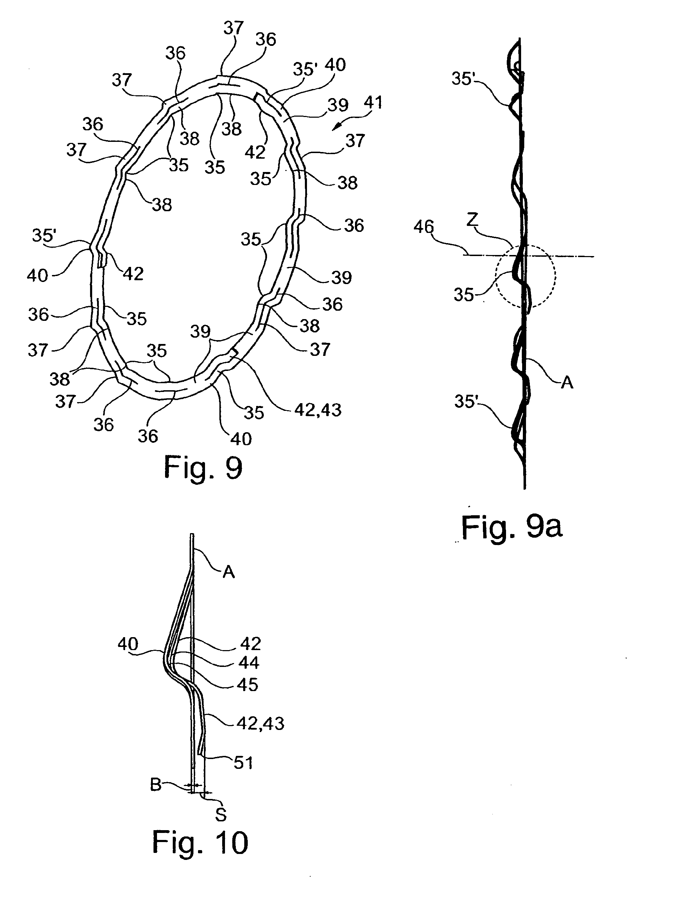

Figuren 9, 9a und Figur 10 - In den Figuren 9 - 10 ist eine zur Wellfeder 21 modifizierte Wellfeder 41 dargestellt, die ohne weiteres in bestehenden Freilaufeinheiten gegen die Wellfeder 21 ausgetauscht werden kann. Die Wellfeder 41 ist in Figur 9 als Einzelteil in einer Gesamtansicht und in Figur 9a in einer Seitenansicht dargestellt. Figur 10 zeigt das Detail Z aus Figur 9a stark vergrößert und nicht maßstäblich.

Figuren 9 und 9a - Die Wellfeder 41 weist mehrere am Umfang verteilte Wellenberge 35 und drei gleichmäßig am Umfang verteilte Wellenberge 35' auf, die gemeinsam in eine axiale Richtung von ebenen Wellentälern 39 abgehen. Zumindest an den Wellenbergen 35 bzw. 35' der Wellfedern 41 und dadurch, dass die Wellfedern 41 aus Federstahl sind, sind die Dämpfungselemente 6 federelastisch ausgebildet.

Die Wellenberge 35 sind mit einem umfangsgerichteten Schlitz 36 versehen, der den jeweiligen Wellenberg 35 in zwei geometrisch gleiche Abschnitte 37 und 38 teilt. Der Schlitz 36 erstreckt sich bis in die Wellentäler 39, so dass die bügelförmig ausgebildeten Abschnitte 37 und 38 gebildet sind, die endseitig in den Wellentälern 39 einmaterialig mit der Wellfeder 41 in die Wellentäler 39 übergehen.

Alternativ können die Abschnitte sich auch hinsichtlich ihrer Geometrie voneinander unterscheiden, beispielsweise dadurch, dass einer der Abschnitte eine geringere radial gerichtete Breite aufweist als der andere der Abschnitte oder das der Schlitz in beliebige Richtung und beliebig oft zwischen den Abschnitten gekrümmt verläuft oder zum Rand hin geneigt verläuft. Einer der Abschnitte kann bei der Herstellung der Feder nach dem Schlitzen gegenüber der Höhe des Umkehrpunktes des Wellenbergs zurückgestellt sein oder hervorstehen, so dass dieser eine andere Federrate aufweist als der radial benachbarte Abschnitt . Im Extremfall ist kann einer der Abschnitte axial soweit in die andere Richtung durchgestellt sein, dass sein Umkehrpunkt in die entgegengesetzte axiale Richtung zeigt, als die des radial benachbarten Abschnitts. Die Wellfeder kann radial einmal durchgängig geschlitzt sein, so dass die Wellfeder in Form eines über die hohe Kante kreisringförmig gebogenen Flachmaterials vorliegt, dessen Biegeenden aufeinander zu gebogen sind und sich an dem Radialschlitz ohne oder mit Berührung gegenüberliegen. Vorzugsweise ist die Wellfeder 41 jedoch umfangsseitig geschlossen und entweder aus einem Blech bzw. Bandmaterial gestanzt oder durch form- bzw. stoffschlüssige Verbindung der Biegeenden des Flachmaterials hergestellt.

Jeder der Wellenberge 35' ist L-förmig geschlitzt, so dass zwei zueinander benachbarte Abschnitte 40 und 42 entstehen, die sich hinsichtlich ihrer Geometrie voneinander unterscheiden. Der Abschnitt 40 ist bügelförmig ausgebildet, wobei sein Verlauf dem des Wellenbergs 35' entspricht, und geht einmaterialig mit der Wellfeder 41 beidseitig des Wellenbergs 35' in den Tälern 39 in die Wellfeder 41 über. Die Abschnitte 42 sind Federzungen 43, die mittels des L-förmigen Schlitzes, durch den der Wellenberg 35' in radiale und in Umfangsrichtung geschlitzt ist, aus dem Material der Wellfeder 42 hergestellt worden sind und die axial aus der Wellfeder 41 abgebogen wurden.

Figur 10 - Das Detail Z ist dargestellt, ohne den eigentlich in der Ansicht auch sichtbaren Verlauf der Wellfeder hinter der Mittelachse 46 abzubilden. Die blattfederartig verlaufenden Federzungen 43 stehen um das Maß S in entgegengesetzte Richtung zu den Wellenbergen 35 und 35' über die gemeinsame Abschlussebene A der in einer Abschlussebene A flachen und umfangsseitig kreisringsegmentförmig gekrümmt verlaufenden Wellentäler 39 hinaus. Damit ist auch der Umkehrpunkt 44 des Wellenberges an der Federzunge 43 axial gegenüber dem Umkehrpunkt 45 des Abschnitts 40 axial verlagert. Außerdem ist das freie Ende 51 der jeweilige Federzunge 43 axial in Richtung des jeweiligen Tales 39 axial leicht zurückgebogen, über den es hervorsteht. Dadurch wird verhindert, das eine ggf. relativ scharfe Kante der aus Blech (Federstahl) beispielsweise durch Feinstanzen hergestellten Federzunge die Anlagefläche an einem Absatz des Freilaufsterns zerkratzt bzw. gewollte Relativbewegungen der Federzunge zur Umgebung durch Verkrallen oder Schaben verhindert oder erschwert werden.

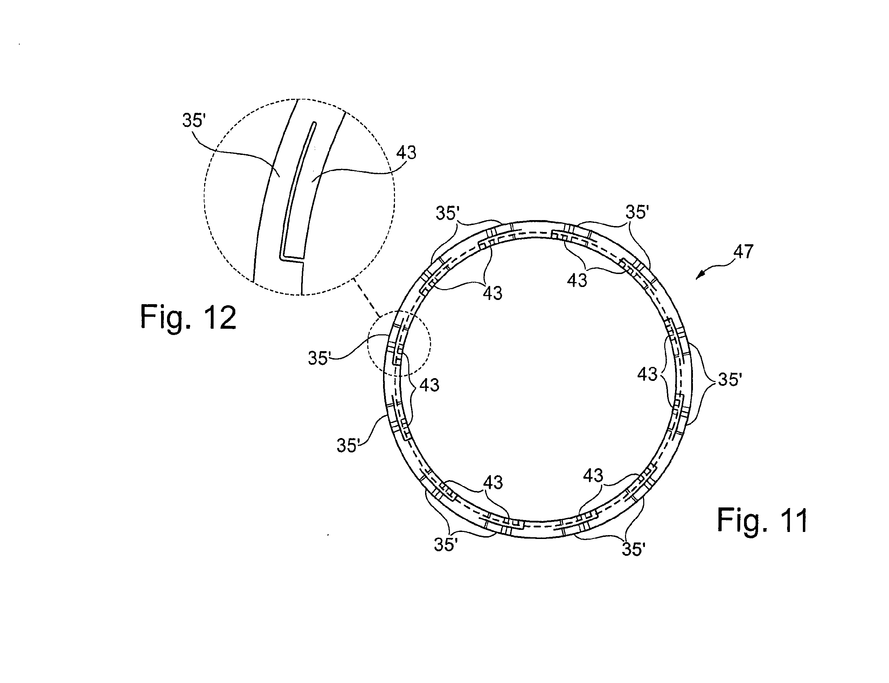

Figuren 11 und 12 - Figuren 11 und 12 zeigen eine Modifikation der Wellfeder 41 in Form einer Wellfeder 47, die im Wesentlichen aufgebaut ist wie die Wellfeder 41, jedoch nur noch Wellenberge 35' aufweist - das heißt, jeder Wellenberg 35' ist L-förmig geschlitzt und weist eine radial innen liegende der Federzungen 43 auf.

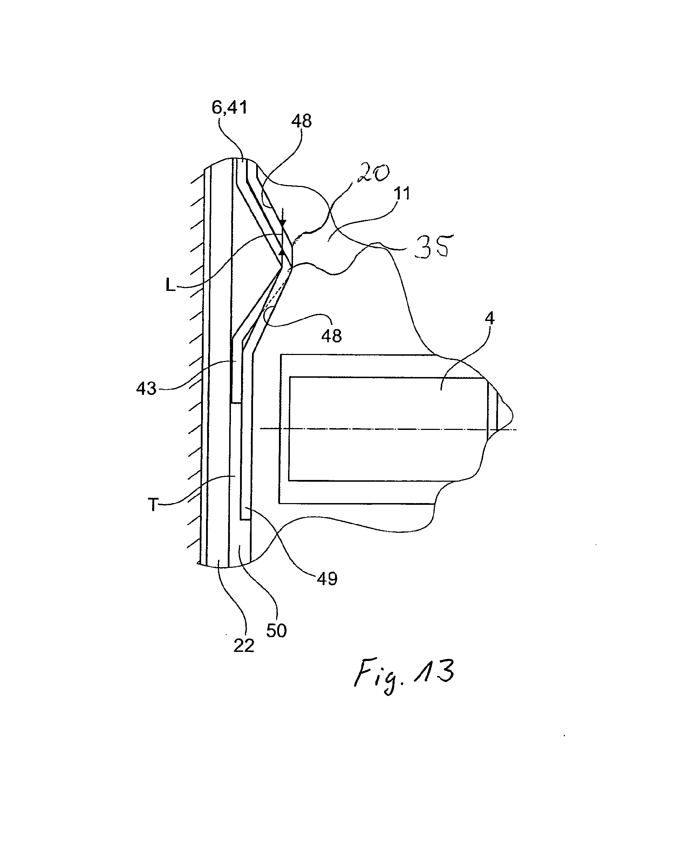

Figur 13 - Figur 13 zeigt eine schematisch stark vereinfachte, vergrößerte und nicht maßstäblich dargestellte Prinzipdarstellung des Zusammenwirkens von Dämpfungskäfig 11 und Dämpfungselement 6 anhand des Details X aus Figur 3, wenn anstelle der Wellenfeder 21 die Wellenfeder 41 eingesetzt ist. Jeweils einer der Wellenberge 35 oder 35' der Wellfeder 41 greifen im Falle der Verwendung in einer Freilaufeinheit 1 gleichermaßen wie die Wellenberge 27 elastisch vorgespannt in eine der Kerben 20 ein.

Die Kerbe 20 ist aus axialer Richtung stirnseitig in den Dämpfungskäfig 11 eingebracht. Die Kerbe 20 ist in diesem Fall symmetrisch ausgebildet und weist zwei Rampen 48 auf. Zwischen der Stirnseite 49 des Dämpfungskäfigs 11 und der Scheibe 22 ist ein Spalt 50 ausgebildet, der breiter als die Blechstärke B des flachen Materials im Tal 39 der Wellfeder 41 aber geringer als die Summe aus der [Blechdicke B und Maß S] nach Figur 11 ist. Die Wellfeder 41 ist in dem in Figur 14 beschriebenen Ausgangszustand so zwischen der Scheibe 22 und der Stirnseite 49 vorgespannt eingeklemmt, dass die Federzungen 43 vorgespannt axial an der Scheibe 22 anliegen, wie anhand eines Beispiels dargestellt ist. Die Federvorspannung der jeweiligen Federzunge 43 drückt den Wellenberg 35' der Wellfeder 41 in die jeweilige Kerbe 20 gegen eine der Rampen 48. Zwischen den Tälern 39 und der Scheibe 22 ist ein Spiel T (Axialspalt) ausgebildet. Da der Dämpfungskäfig 11 von beiden Seiten mit jeweils einer Feder 41 axial eingespannt ist (siehe Darstellung nach Figur 3), sind Dämpfungskäfig 11 und die Wellfeder 41 oder nur der Dämpfungskäfig 11 relativ zur Scheibe 22 in beide mit dem Doppelpfeil markierten Richtungen (Umfangsrichtungen) wenigstens um das Maß L begrenzt beweglich.

**Bezugszahlenliste**
- 1: Freilaufeinheit
- 2: Freilaufring
- 3: Freilaufstern
- 4: Klemmkörper
- 5: Käfig
- 6: Dämpfungselement
- 7: Welle
- 8: Sperrfläche
- 9: Spannelement
- 10: Steg des Käfigs
- 11: Dämpfungskäfig
- 12: Steg des Dämpfungskäfigs
- 13: rampenartig ausgebildeter Abschnitt
- 14: Abtriebswelle
- 15: Außenring
- 16: Absatz des Freilaufsterns
- 17: Absatz des Freilaufsterns
- 18: Anlauffläche
- 19: Anlauffläche
- 20: Kerbe
- 21: Wellfeder
- 22: Scheibe
- 23: Käfigtasche des Dämpfungs- käfigs
- 24: Käfigtasche des Käfigs
- 25: Seitenrand des Dämpfungs- käfigs
- 26: Seitenrand des Käfigs
- 27: Wellenberg

- 28: Stützbasis
- 29: Rampe in der Kerbe
- 30: Rampe am Wellenberg
- 31: Spitze des Wellenbergs
- 32: Verlauf der Federkraft am Klemmkörper 4
- 33: Verlauf der Federkraft des Spannelementes 9
- 34: Freilaufanordnung
- 35: Wellenberg
- 35': Wellenberg
- 36: Schlitz
- 37: Abschnitt
- 38: Abschnitt
- 39: Tal
- 40: Abschnitt
- 41: Wellfeder
- 42: Abschnitt
- 43: Federzunge
- 44: Umkehrpunkt
- 45: Umkehrpunkt
- 46: Mittelachse
- 47: Wellfeder
- 48: Rampe
- 49: Stirnseite
- 50: Spalt
- 51: freies Ende der Federzunge
- 52: Verlauf der Federkraft der Wellfeder 21
- 53: Trennlinie

- 54: Richtungspfeil
- 55: Richtungspfeil
- 56: weiterer Verlauf der Feder- kraft am Klemmkörper
- 57: Verlauf der Reibkraft zwi- schen Wellfeder und Anlauf- fläche
- 58: Dämpfung

## Patentansprüche

1. Freilaufeinheit (1) mit wenigstens einem Freilaufring (2) und mindestens einem Freilaufstern (3), Klemmkörpern (4) zwischen dem Freilaufring (2) und dem Freilaufstern (3), mit wenigstens einem Käfig (5) und mit wenigstens einem Dämpfungselement(6), wobei der Freilaufstern (3) Sperrflächen (8) aufweist und zwischen dem Freilaufring (2) und dem Freilaufstern (3) mindestens eine Reihe umfangsseitig zueinander auf Abstand gehaltener Klemmkörper (4) angeordnet ist und wobei jeder Klemmkörper (4) zwischen einem Paar der zuvor genannten Sperrflächen (8) angeordnet ist, wobei das Dämpfungselement (6) separat zu dem Käfig (5) angeordnet und abgestützt ist, **dadurch gekennzeichnet, dass** die Klemmkörper (4) in einem zu dem Käfig (5) separaten Dämpfungskäfig (11) angeordnet sind, wobei der Dämpfungskäfig (11) mit dem Dämpfungselement (6) im Eingriff steht, und wobei das Dämpfungselement (6) zwischen dem Dämpfungskäfig (11) und der Umgebungskonstruktion federelastisch eingespannt ist.

2. Freilaufeinheit (1) nach Anspruch 1, **dadurch gekennzeichnet, dass** der mit den Klemmkörpern (4) wirkverbundene Dämpfungskäfig (11) Kerben (20) aufweist und dass das gegen den Dämpfungskäfig (11) vorgespannte Dämpfungselement (6) wenigstens aus einer Wellfeder (21, 41, 47) mit einander abwechselnden Wellenbergen (27, 35, 35') und Wellentälern (39) gebildet ist und die Wellenberge (27, 35, 35') zumindest teilweise formschlüssig und federelastisch vorgespannt in die Kerben (20) eingreifen, welche umfangsseitig an dem Dämpfungskäfig (11) ausgebildet sind.

3. Freilaufeinheit nach Anspruch 2, **dadurch gekennzeichnet, dass** wenigstens ein erster Abschnitt (37, 38, 40, 42) von wenigstens zwei einander benachbarten, einmaterialig mit der Wellfeder (41, 47) ausgebildeten und dabei voneinander getrennten Abschnitten (37, 38, 40, 42) separat-relativbeweglich zum dem zweiten der Abschnitte (37, 38, 40, 42) federelastisch in Richtung des Dämpfungskäfigs (11) vorgespannt ist.

4. Freilaufeinheit nach Anspruch 3, **dadurch gekennzeichnet, dass** zumindest der erste Abschnitt (40, 42) mit einer anderen Vorspannung vorgespannt ist, als der zweite Abschnitt (40, 42).

5. Freilaufeinheit nach Anspruch 3, **dadurch gekennzeichnet, dass** zumindest einer der Abschnitte (40, 42) wenigstens teilweise an einem der Wellenberge (35') ausgebildet ist und federelastisch vorgespannt jeweils in einer der Kerben (20) zumindest teilweise anliegt.

6. Freilaufeinheit nach Anspruch 5, **dadurch gekennzeichnet, dass** die Wellenberge (35, 35') einerseits in eine gemeinsame Richtung hervorwölben und andererseits in ebene flachen Verlauf von Wellentälern (39) vorgebende Wellfederabschnitte übergehen.

7. Freilaufeinheit nach Anspruch 3, **dadurch gekennzeichnet, dass** der erste Abschnitt (42) blattfederartig gestaltet ist.

8. Freilaufeinheit nach Anspruch 7, **dadurch gekennzeichnet, dass** der blattfederartig ausgebildete erste Abschnitt (42) zumindest teilweise in entgegengesetzte Richtung zu den Wellenbergen (35') aus der Wellfeder (41, 47) hervorsteht.

9. Freilaufeinheit nach Anspruch 7, **dadurch gekennzeichnet, dass** ein freies Ende (51) des blattfederartig gestalteten ersten Abschnitts in entgegengesetzte Richtung zu den Wellenbergen (35, 35') über einen der Wellfederabschnitte hinaus aus der Wellfeder (41, 47) hervorsteht.

## Claims

1. Freewheel unit (1) having at least one freewheel ring (2) and at least one freewheel star (3), having clamping bodies (4) between the freewheel ring (2) and the freewheel star (3), having at least one cage (5), and having at least one damping element (6), wherein the freewheel star (3) has blocking surfaces (8), and at least one row of clamping bodies (4) held at intervals from one another in the circumferential direction is arranged between the freewheel ring (2) and the freewheel star (3), and wherein each clamping body (4) is arranged between a pair of the abovementioned blocking surfaces (8), wherein the damping element (6) is arranged and supported separately from the cage (5), **characterized in that** the clamping bodies (4) are arranged in a damping cage (11) which is separate from the cage (5), wherein the damping cage (11) engages with the damping element (6), and wherein the damping element (6) is resiliently elastically braced between the damping cage (11) and the surrounding structure.

2. Freewheel unit (1) according to Claim 1, **characterized in that** the damping cage (11) which is operatively connected to the clamping bodies (4) has notches (20), and **in that** the damping element (6) which is preloaded against the damping cage (11) is formed at least from an ondular washer (21, 41, 47) with alternating wave peaks (27, 35, 35') and wave troughs (39), and the wave peaks (27, 35, 35') at least partially engage in a positively locking and resiliently elastically preloaded manner into the notches (20) formed on the circumference of the damping cage (11).

3. Freewheel unit according to Claim 2, **characterized in that** at least a first portion (37, 38, 40, 42) of at least two mutually adjacent portions (37, 38, 40, 42) formed materially integrally with the ondular washer (41, 47) and separately from one another is resiliently elastically preloaded in the direction of the damping cage (11) so as to be separately relatively movable with respect to the second of the portions (37, 38, 40, 42).

4. Freewheel unit according to Claim 3, **characterized in that** at least the first portion (40, 42) is preloaded with a different preload than the second portion (40, 42).

5. Freewheel unit according to Claim 3, **characterized in that** at least one of the portions (40, 42) is formed at least partially at one of the wave peaks (35') and at least partially rests in a resiliently elastically preloaded manner in each case in one of the notches (20).

6. Freewheel unit according to Claim 5, **characterized in that** the wave peaks (35, 35') at one side project in a domed fashion in a common direction and at the other side merge into ondular washer portions which define planar flat profiles of wave troughs (39).

7. Freewheel unit according to Claim 3, **characterized in that** the first portion (42) is formed in the manner of a leaf spring.

8. Freewheel unit according to Claim 7, **characterized in that** the first portion (42) formed in the manner of a leaf spring at least partially projects out of the ondular washer (41, 47) in the opposite direction to the wave peaks (35').

9. Freewheel unit according to Claim 7, **characterized in that** a free end (51) of the first portion formed in the manner of a leaf spring projects out of the ondular washer (41, 47) beyond one of the ondular washer portions in the opposite direction to the wave peaks (35, 35').

## Revendications

1. Unité de roue libre (1) comprenant au moins une bague de roue libre (2) et au moins une étoile de roue libre (3), des corps de serrage (4) entre la bague de roue libre (2) et l'étoile de roue libre (3), au moins une cage (5) et au moins un élément d'amortissement (6), l'étoile de roue libre (3) présentant des surfaces de blocage (8) et entre la bague de roue libre (2) et l'étoile de roue libre (3) étant disposée au moins une rangée de corps de serrage (4) maintenus à distance les uns par rapport aux autres sur la périphérie, chaque corps de serrage (4) étant disposé entre une paire des surfaces de blocage (8) susmentionnées, l'élément d'amortissement (6) étant disposé et supporté séparément par rapport à la cage (5), **caractérisée en ce que** les corps de serrage (4) sont disposés dans une cage d'amortissement (11) séparée de la cage (5), la cage d'amortissement (11) étant en prise avec l'élément d'amortissement (6) et l'élément d'amortissement (6) étant serré de manière élastique à ressort entre la cage d'amortissement (11) et la construction environnante.

2. Unité de roue libre (1) selon la revendication 1, **caractérisée en ce que** la cage d'amortissement (11) en liaison fonctionnelle avec les corps de serrage (4) présente des encoches (20) et **en ce que** l'élément d'amortissement (6) précontraint contre la cage d'amortissement (11) est formé au moins d'un ressort ondulé (21, 41, 47) avec des sommets d'ondulations alternant les uns avec les autres (27, 35, 35') et des creux d'ondulations (39) et les sommets d'ondulations (27, 35, 35') viennent en prise au moins en partie par engagement par correspondance géométrique et de manière précontrainte élastiquement à ressort dans les encoches (20), qui sont réalisées sur la périphérie au niveau de la cage d'amortissement (11).

3. Unité de roue libre selon la revendication 2, **caractérisée en ce qu'**au moins une première portion (37, 38, 40, 42) d'au moins deux portions (37, 38, 40, 42) adjacentes l'une à l'autre, réalisées en un matériau unitaire avec le ressort ondulé (41, 47) et séparées en l'occurrence l'une de l'autre, est précontrainte de manière déplaçable relativement et séparément par rapport à la deuxième des portions (37, 38, 40, 42) de manière élastique à ressort dans la direction de la cage d'amortissement (11).

4. Unité de roue libre selon la revendication 3, **caractérisée en ce qu'**au moins la première portion (40, 42) est précontrainte avec une autre précontrainte que la deuxième portion (40, 42).

5. Unité de roue libre selon la revendication 3, **caractérisée en ce qu'**au moins l'une des portions (40, 42) est réalisée au moins en partie sur l'un des sommets d'ondulations (35') et s'applique au moins en partie de manière précontrainte élastiquement à ressort à chaque fois dans l'une des encoches (20).

6. Unité de roue libre selon la revendication 5, **caractérisée en ce que** les sommets d'ondulations (35, 35') font saillie d'une part dans une direction commune et d'autre part se prolongent suivant une allure plane et plate par des portions de ressort ondulé prédéfinissant des creux d'ondulations (39).

7. Unité de roue libre selon la revendication 3, **caractérisée en ce que** la première portion (42) est configurée sous forme de ressort à lame.

8. Unité de roue libre selon la revendication 7, **caractérisée en ce que** la première portion (42) réalisée sous forme de ressort à lame fait saillie au moins en partie dans la direction opposée aux sommets d'ondulations (35') hors du ressort ondulé (41, 47).

9. Unité de roue libre selon la revendication 7, **caractérisée en ce qu'**une extrémité libre (51) de la première portion de configuration en forme de ressort à lame fait saillie hors du ressort ondulé (41, 47) dans la direction opposée aux sommets d'ondulations (35, 35') au-delà des portions de ressort ondulé.
